# EUROPEAN PATENT SPECIFICATION

(11) **EP 4 109 290 B1**
(45) Date of publication and mention of the grant of the patent: **06.03.2024**
(21) Application number: 21180998.3
(22) Date of filing: 22.06.2021
(51) Int. Cl.: G06F 16/23

(54) **A METHOD AND APPARATUS FOR VALIDATION OF MODIFICATIONS IN A DATABASE**
VERFAHREN UND VORRICHTUNG ZUR VALIDIERUNG VON ÄNDERUNGEN IN EINER DATENBANK
PROCÉDÉ ET APPAREIL POUR VALIDATION DE MODIFICATIONS DANS UNE BASE DE DONNÉES

(43) Date of publication of application: 28.12.2022
(73) Proprietor: Nokia Solutions and Networks Oy, 02610 Espoo (FI)
(72) Inventor: Guilbeault, Frederic, Ottawa, K2K 1G2 (CA)
(74) Representative: IP HILLS NV

(56) References cited:
- US-A1- 2011 270 807
- US-A1- 2016 124 993
- US-B1- 10 963 435

## Description

### Technical Field

Various example embodiments relate to the validation of changes into databases.

### Background

A database stores information or data in the form of data records. An example of a database is the so-called datastore. A datastore is an example of a logical database that stores the complete set of configuration data required to get network devices such as a router or a switch from their initial default state into a desired operational state. A datastore is managed by a network management protocol such as the Network Configuration Protocol, NETCONF, which provides mechanisms to create, update, and delete the configuration of the network devices.

To make changes in the database, i.e., to add, modify, or remove stored data records, the system managing the database has to validate the change before committing the change in the database. Validating requested changes, however, often requires the complete database to be re-evaluated to verify that the requested change does not corrupt the database integrity. This validation process is thus computationally intensive and time inefficient and even impractical for databases storing hundreds of terabytes of data.

US2016124993A1 discloses a method for validating data changes made to a database. The changes are made in the context of a transaction, and validation is performed using a rules database storing a plurality of rules. The method includes identifying a set of data entities affected by one or more data changes made in the context of the transaction. In response to an instruction to commit the transaction, data entities in the set of affected data entities are validated using rules from the rules database. The transaction is committed in dependence on the outcome of the validation.

US10963435B1 discloses a method for validating data migrated from a source database to a target database and storing validation metrics resulting from validating the data. The data validation process can generate and store validation statuses of the partitions as well as validation metrics of the partitions being validated.

### Summary

It is an object of embodiments of the present disclosure to provide an apparatus for validating changes into databases in a more computationally and time-efficient manner.

The scope of protection of the invention is set out by the independent claims. The embodiments and features described in this specification that do not fall within the scope of the independent claims, if any, are to be interpreted as examples useful for understanding various embodiments of the invention.

This object is achieved, according to a first example aspect of the present disclosure, by an apparatus as defined in claim 1, comprising means which are configured to perform the following steps.
- obtaining a request for modifying data records stored in a database; the data records being divided into partitions;
- selecting, from a pre-defined set of validation rules, a subset of validation rules based on the obtained request, the subset of validation rules comprising one or more validation rules;
- identifying at least one partition affected by the obtained request;
- applying the one or more validation rules of the subset to the at least one affected partition, thereby obtaining validation results for respective one or more validation rules for the at least one affected partition;
- aggregating, the validation results for the at least one affected partition with validation results for the respective validation rules of the subset for unaffected partitions, thereby obtaining aggregated validation results for the respective validation rules of the subset; and
- validating, the aggregated results by means of validation conditions associated with the respective validation rules of the subset;
and wherein the means are further configured to perform said identifying by deriving index maps expression associated to the one or more validation rules of the subset and creating the corresponding index maps from the data records of the at least one affected partition, thereby obtaining index maps mapping the data records of the at least one affected partition to respective indexes, and, wherein the means are further configured for performing said applying by applying the one or more validation rules of the subset to the respective data records by means of the index maps, thereby obtaining validation results for the respective validation rules per partition.

In other words, the apparatus comprises means configured to validate changes in a database that stores data in the form of data records. The data records are divided into partitions with a partition comprising one or more data records. Upon receiving a change request, the apparatus identifies the affected partitions, i.e., partitions for which data records are changed. The number of the affected partitions depends on the requested change. Once the affected partitions are identified, the apparatus selects one or more validation rules from all available rules relevant for the validation of the requested change. The validation rules are defined for validating the data stored in the database. For example, if the database stores network configuration data, then the validation rules are defined to validate the integrity of the network configuration data, to validate whether the network resource limits are respected, and so on. The validation rules are thus specific to the data, i.e., data-specific, or data-driven, and can, for example, be defined by the communication network expert or the network operator, i.e., the database operator. As data records may vary among the different partitions, the validation rules for evaluating the latter may vary as well. Thus, the validation rules for one partition may be different than those for another partition. Once, the relevant validation rules are identified, the apparatus applies the selected rules to the affected partitions. To do so, each validation rule is applied to the respective affected partitions. As a result, a validation result for a respective validation rule and a respective affected partition is obtained. An aggregated validation result is then derived by aggregating the validation result for a respective validation rule for all partitions in the database, i.e., the validation result resulting from applying the selected validation rule for the affected partitions and the unaffected partitions. Thus, an aggregated validation result is obtained for each selected validation rule. The respective aggregated results are then evaluated or verified using validation conditions associated with the respective validation rules. Similarly, the validation conclusions are also data-driven and can be defined by the database operator. The outcome of the evaluation or verification is a validation conclusion that indicates if the requested change is valid or not, e.g., if the requested change preserves the integrity of the database or not. In other words, the validation verifies if the validation requirements as defined by the validation rules and the conditions are respected.

Because the validation rules and conditions are data-driven, they can be defined on the fly without having to modify the validation process itself, i.e., the steps performed by the apparatus to validate a change request. The changes to the rules and the conditions thus take an immediate effect.

Applying the validation rules on a partition basis allows executing the validation rules only on the data records of the affected partitions. Doing so allows determining the new validation results for the affected partitions only which can then be simply aggregated with the validation results of the unaffected partitions to obtain a validation result reflecting the changed state of the complete database. The aggregated validation result is then validated by applying the validation condition to determine whether the database integrity is preserved. As a result, the apparatus is capable of validating the requested change in a computationally and time-efficient manner. Furthermore, as validation rules are applied to affected partitions and not to the complete database, the apparatus requires much fewer computation resources for performing the change request validation.

Furthermore, the steps of selecting and identifying are functionally independent from one another. Thus, the apparatus may be configured to perform these steps in any order, for example, first identify the affected partitions and then select the subset of validation rules as described above or the other way around. Alternatively, the apparatus may be configured to perform these two steps in parallel which allows improving the time efficiency of the validation of the requested change at the cost of more computation resources. Furthermore, as the steps of applying, aggregating, and validating are all performed on a rule basis, these steps may also be parallelized. That is, the respective selected validation rules may be applied to the affected partitions independently from one another. Similarly, the aggregation of the validation results for the respective rules and validation of the respective aggregated results can also done independently from one another. In other words, any functionally independent steps may be performed in parallel which results in significant improvement of the time efficiency of the validation process.

According to an example embodiment, the means are further configured to perform said selecting by deriving, from the obtained request, type of data records affected by the request, and, by identifying, from the pre-defined set of validation rules, one or more validation rules associated with the affected type of data records.

In other words, the apparatus derives information of the requested modification from the change request. Depending on the requested change, modifications at a data record level or a partition level may be observed. At a data record level, a change request may introduce modifications in one or more data records of an existing partition, may add data records to one or more existing partitions, or delete data records from one or more partitions. At a partition level, a change request may add one or more new partitions, or delete entire partitions. By exploiting the information provided in the change request, the apparatus is able to identify the type of data records affected by the change request. Using this information, the apparatus is able to derive the validation rules associated with identified types of data records. Preferably, the association between data records type and validation rules employs the concept of validation scopes where a scope defines the validation rules associated with a particular scope and, hence, type of data records. The definition of scopes allows for a validation rule to be associated with one or more scopes. As a result, the validation scopes may overlap partially or completely. The use of scopes thus allows for a more precise selection of the validation rules that are required for validating the requested change.

According to an example embodiment, the means are further configured to perform said identifying by applying the obtained request to the stored data thereby obtaining modified data, and, identifying, therefrom, the at least one affected partition.

In other words, the requested change is applied to the current version of the database to obtain the so-called candidate database. During the creation of the database, modifications in the data records, and, therefore, the partitions, are being identified. Depending on the requested change, modifications at a data record level or a partition level may be observed as detailed above.

The means are further configured to perform said identifying by deriving index maps expressions associated to the one or more validation rules of the subset and creating the corresponding index maps from the data records of the at least one affected partition, thereby obtaining index maps mapping the data records of the at least one affected partition to respective indexes, and, wherein the means are further configured for performing said applying by applying the one or more validation rules of the subset to the respective data records by means of the index maps, thereby obtaining validation results for the respective validation rules per partition.

In other words, an index map indexing the data records of the affected partition is created for a respective selected validation rule. The index map is a look-up table where each index of the table is associated with a pointer referencing a given data record of a respective affected partition. By creating index maps in this manner, the validation rules can be applied to the data records of the affected partitions in a computationally and time-efficient manner. Furthermore, as the creation of the different the index maps is independent of one another, the index maps may be also created in parallel. More specifically, the index maps for the respective partitions can all be created in a concurrent fashion,

According to an example embodiment, the means are further configured to perform said aggregating by retrieving the validation results for the respective validation rules of the subset for the unaffected partitions.

In other words, the validation results for all partitions are stored in a memory. The memory could be the apparatus's local memory or external memory. The validation results for all unaffected partitions for the selected validation rules can thus be retrieved therefrom. The retrieved validation results are then aggregated with the newly obtained validation results on a rule-per-rule basis. That is, the validation results for a given rule are aggregated across all partitions to obtain a new validation result for the complete database. Aggregating in this manner, thus, allows obtaining a validation result for a specific validation rule without applying the validation rule to the complete database.

According to an example embodiment, the means are further configured to perform storing the modified data and the new validation results for the at least one affected partition.

In other words, the requested modification is committed to the database and the new validation results for the affected partitions are stored in the apparatus local memory or the external memory for further use.

According to an example embodiment, the means are further configured to group the data records into partitions such that the applying can be applied to a respective partition. In other words, the data stored in the database is partitioned in such a way that the validation rules can be applied on a partition-per-partition basis. Doing so allows obtaining validation results for a respective rule on a partition basis rather than to the complete database. Furthermore, partitioning the stored data in such a way allows performing the aggregating of the validation results and the validating of the aggregated results across partitions.

According to an example embodiment, the partitions comprise at least one distinct data record. In other words, the partitioning of the stored data is done in such a way that there is no intersection between partitions. In further embodiments, at least a subset of partitions may further comprise at least one data record common for all partitions within that subset. The at least one common data record may thus be common for two or more partitions, or even all partitions. In such cases, the affected partition is treated as two partitions, one sub-partition comprising the at least one distinct data record, i.e., the distinct subset of the partition, and another partition comprising the at least one common data record, i.e., the common subset of the partition. In either case, the partitions are defined such that the respective partitions are formed as coherent sets of data records. Partitioning in this way allows to preserve the data integrity across partitions in the database.

According to an example embodiment, the means are further configured to perform applying the pre-defined set of validation rules to the respective partitions, thereby obtaining initial validation results, and storing the initial validation results.

In other words, the complete set of pre-defined validation rules is applied to the respective partitions in the same manner as detailed in the preceding embodiments. As a result, initial validation results for the respective validation rules are obtained per partition. These initial validation results are then stored in the apparatus's local or external memory for further use.

According to an example embodiment, the data stored in the database comprises configuration data for a network device. The configuration data is data required to manage the operation of a network device such as a router or a switch. For example, the configuration data may comprise data required to get the network device from its initial default state into a desired operational state. Such a database is commonly referred to as a datastore. The datastore can, for example, be managed by a network management protocol such as the Network Configuration Protocol, NETCONF which provides mechanisms to install, manipulate, and delete the configuration of one or more network devices.

According to example embodiments, the apparatus forms part of a database management system.

The apparatus may be provided internally or externally to the database management system. Further, the apparatus may comprise at least one local processor and at least one local memory. Alternatively, the apparatus may be configured to interface with at least one processor and at least one shared memory of the database management system. In either case, the at least one memory includes computer program code which comprises algorithms in the form of software instructions, i.e., computer-executable instructions, which can be executed by the at least one processor to controls the operation of the apparatus. Thus, the at least one memory and the computer program code together with the at least one processor cause the performing of the apparatus. In addition to the computer program code, the at least one memory may store any other data needed by the apparatus to manage the database. For example, the at least one memory may further store the validation rules and the validation conditions. Additionally, the at least one memory may store the index maps and the aggregated and not aggregated validation results.

According to an example embodiment, the database management system is a query-based management system.

A query-based database management system uses a query language for managing the data stored in the database. The query language used to query the stored data depends on the data model employed by the database. For example, if the data in the database is stored in accordance with the XML data model, the database management system then needs to be implemented to use XML query languages such as XQuery. Similarly, if the database is implemented using the JSON data model, the database management system needs to be implemented to use JSON query languages such as JSONiq.

According to a second example aspect, a method is disclosed as defined in claim 13. In particular, the method comprises :
- obtaining a request for modifying data records stored in a database; the data records being divided into partitions;
- selecting, from a pre-defined set of validation rules, a subset of validation rules based on the obtained request, the subset of validation rules comprising one or more validation rules;
- identifying at least one partition affected by the obtained request;
- applying the one or more validation rules of the subset to the at least one affected partition, thereby obtaining validation results for respective one or more validation rules for the at least one affected partition;
- aggregating, the validation results for the at least one affected partition with validation results for the respective validation rules of the subset for unaffected partitions, thereby obtaining aggregated validation results for the respective validation rules of the subset; and
- validating, the aggregated results by means of validation conditions associated with the respective validation rules of the subset;
and wherein the method further comprises performing said identifying by deriving index maps expression associated to the one or more validation rules of the subset and creating the corresponding index maps from the data records of the at least one affected partition, thereby obtaining index maps mapping the data records of the at least one affected partition to respective indexes, and performing said applying by applying the one or more validation rules of the subset to the respective data records by means of the index maps, thereby obtaining validation results for the respective validation rules per partition.

According to a third example aspect, a computer program product is disclosed as defined in claim 14. In particular, the computer program product comprises computer-executable instructions for causing a computer to perform at least the following:
- obtaining a request for modifying data records stored in a database; the data records being divided into partitions;
- selecting, from a pre-defined set of validation rules, a subset of validation rules based on the obtained request, the subset of validation rules comprising one or more validation rules;
- identifying at least one partition affected by the obtained request;
- applying the one or more validation rules of the subset to the at least one affected partition, thereby obtaining validation results for respective one or more validation rules for the at least one affected partition;
- aggregating, the validation results for the at least one affected partition with validation results for the respective validation rules of the subset for unaffected partitions, thereby obtaining aggregated validation results for the respective validation rules of the subset; and
- validating, the aggregated results by means of validation conditions associated with the respective validation rules of the subset;
and wherein the identifying comprises deriving index maps expression associated to the one or more validation rules of the subset and creating the corresponding index maps from the data records of the at least one affected partition, thereby obtaining index maps mapping the data records of the at least one affected partition to respective indexes, and wherein the applying comprises applying the one or more validation rules of the subset to the respective data records by means of the index maps, thereby obtaining validation results for the respective validation rules per partition.

According to a fourth example aspect, a computer readable storage medium is disclosed as defined in claim 15. In particular, the computer readable storage medium comprises computer-executable instructions for causing a computer to perform at least the following:
- obtaining a request for modifying data records stored in a database, the data records being divided into partitions;
- selecting, from a pre-defined set of validation rules, a subset of validation rules based on the obtained request, the subset of validation rules comprising one or more validation rules;
- identifying at least one partition affected by the obtained request;
- applying the one or more validation rules of the subset to the at least one affected partition, thereby obtaining validation results for respective one or more validation rules for the at least one affected partition;
- aggregating, the validation results for the at least one affected partition with validation results for the respective validation rules of the subset for unaffected partitions, thereby obtaining aggregated validation results for the respective validation rules of the subset; and
- validating, the aggregated results by means of validation conditions associated with the respective validation rules of the subset;
and wherein the identifying comprises deriving index maps expression associated to the one or more validation rules of the subset and creating the corresponding index maps from the data records of the at least one affected partition, thereby obtaining index maps mapping the data records of the at least one affected partition to respective indexes, and wherein the applying comprises applying the one or more validation rules of the subset to the respective data records by means of the index maps, thereby obtaining validation results for the respective validation rules per partition.

The various example embodiments of the first example aspect may be applied as example embodiments to the second, third, and fourth example aspects.

### Brief Description of the Drawings

Some example embodiments will now be described with reference to the accompanying drawings.
FIG.1A shows an example data represented in an XML format;
FIG.1B shows an example of data records representing the data shown in FIG.1A;
FIG.1C shows an example of a graph representation of data records;
FIG.2A shows a block scheme of a database system according to embodiments of the present disclosure;
FIG.2B shows steps for initializing a database management system according to embodiments of the present disclosure;
FIG.2C shows steps for validating changes in the database according to embodiments of the present disclosure;
FIG.3A shows an example of data records affected by a change request;
FIG.3B shows an example of the steps for validating changes in the database according to embodiments of the present disclosure;
FIG.4A shows an example illustration of a look-up table format for storing the validation results;
FIG.4B shows another example illustration of a look-up table format for storing the validation results;
FIG.5 shows an example of validation rules according to embodiments of the present disclosure; and
FIG.6 shows an example embodiment of a suitable computing system for performing one or several steps of embodiments of the present disclosure.

### Detailed Description of Embodiment(s)

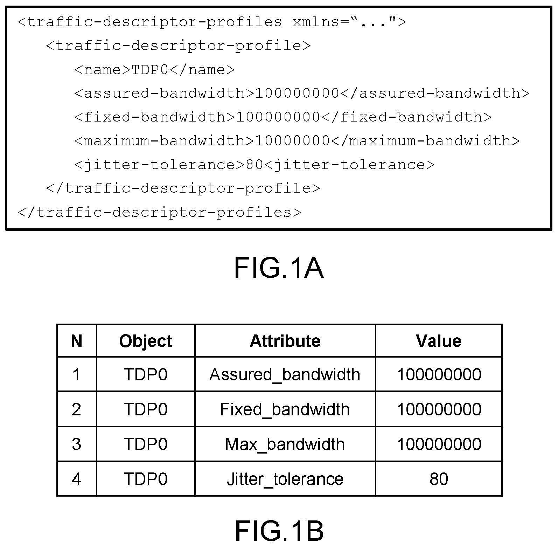

A database stores information or data in the form of data records. The data records are created based on a data format or a data model employed by the database system, i.e., the database itself and its managing system. FIG.1A shows an example of data or information that can be stored in a database. In this example, the data is configuration data for a network device that has a hierarchical, tree-like structure and the database is commonly referred to as a datastore. In particular, configuration data for network devices may be stored in the datastore in accordance with the RFC 6241 protocol, i.e., the Network Configuration Protocol, NETCONF, protocol. The NETCONF protocol provides mechanisms to install, manipulate, and delete the configuration of network devices. It uses an Extensible Markup Language (XML)-based data encoding as the date format for the configuration data.

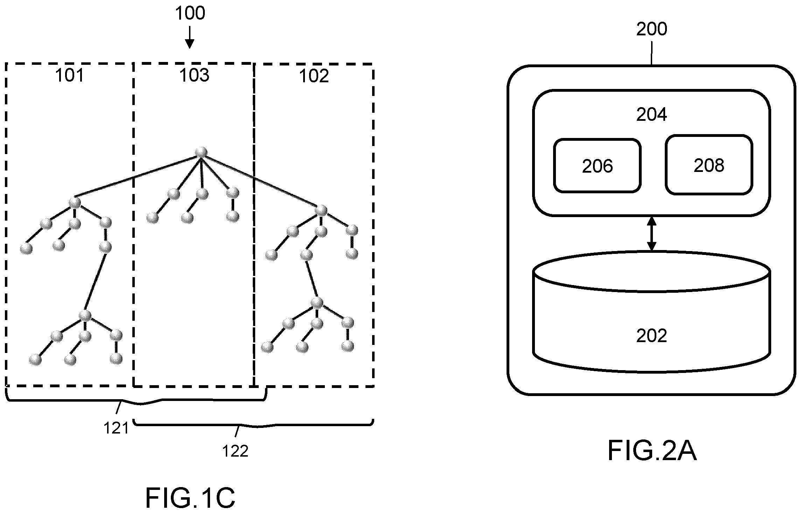

To store this data, the data is represented in the form of connected data records as shown in FIG.1B. For the example shown in FIG.1A, four data records are created to describe the properties of the traffic descriptor profile, i.e., TDPO, of the network device. The first data record in the table records the value of the assured bandwidth for the TDP0. The second data records the value of the fixed bandwidth for the TDPO, and so on. In this way, complete configuration data for a network device and a complete network can be stored in the datastore. Visually the data may be represented in the form of a graph as shown in FIG.1C, where the objects and the values are the nodes in the graph and the attributes are the connections between the nodes.

The data stored in the datastore may, however, vary over time. Configuration data may be added, modified, or removed. For example, in addition to the data records describing the TDPO, another TDP profile, e.g., TDP1, may be added, or the data records for the TDP0 may be modified or deleted. To make changes in the datastore, the database management system has to validate the change before committing the change in the datastore, i.e., introducing the change in the datastore by adding, modifying, or deleting data records. Conventionally, before committing any changes in a datastore, a copy of the datastore commonly referred to as the running datastore is created. The copy is then modified as per the change request to create the so-called candidate datastore. The complete candidate datastore is then validated to evaluate whether the requested change does not corrupt the datastore integrity and possibly that the network resource limits are respected. If the validation is successful, the requested change is committed to the running datastore, i.e., the requested change is introduced in the running datastore. As the change request validation requires validation of the complete candidate datastore, the validation process is costly in terms of the time and processing power required to validate the complete datastore. This problem becomes even more severe and thus impractical for datastore and, thus, databases storing hundreds of terabytes of data.

Embodiments of the present disclosure disclose an apparatus capable of validating change requests in a time and computationally efficient manner which can be comprised in a database management system capable of managing databases such as datastores.

FIG.2A shows a block schematic of a database system 200 according to embodiments of the present disclosure. The database system 200 comprises database 202 which is a collection of one or more storage units and a database management system 204. In the embodiment shown in FIG.2A, the database management system 204 comprises a partition manager module 206 and a validation manager module 208. The data management system 204 further comprises at least one memory and at least one processor which are however not illustrated in the figure for simplicity reasons. Algorithms to operate the database management system and its modules are provided as software or program instructions stored in the memory. In addition to storing software instructions, the at least one memory may further store any data generated by the database management system and its modules and any other data required by it for their proper operation. This data may, however, be stored in another memory external to the database management system. The at least one processor executes the instructions stored in the at least one memory and controls the operation of the database management system 204 as a whole, i.e., by further controlling the operation of the partition manager module 206 and the validation manager module 208. Otherwise said, the database managing system 204 is a computing system that comprises hardware and software components with the software component being responsible for managing the data stored in the database 202, managing the data partitions and supporting the candidate and running databases to effect the requested changes in the database. Alternatively, the database management system and/or its modules may be realized as a hardware-only implementation by means of a specific circuitry for executing their respective functionality.

More specifically, the partition manager module 206 comprises means configured to divide the data records into partitions. As described above, the partition manager module 206 may be a specific circuitry implementing its functionality as a hardware-only implementation, or a combination of a hardware and software implementation. Depending on the data stored in the database and the partition scheme, the data may be partition in various ways. For example, the partitions can comprise respective one or more distinct data records. In other words, the data records of one partition do not form part of another partition. In the case of the network configuration data, it is possible that in addition to the distinct data records, some or even all partitions can comprise one or more data records that are common to these partitions. The configuration data which is common to these partitions is a distinct subset of common configuration data that can be combined with the distinct data records of any one of these partitions so that their configuration data is consistent. This may be the case when two different data records, e.g., DR1 and DR2, contain a reference to another data record, DR3. Thus, a partition comprising only the individual data record, i.e., DR1 or DR2, will be inconsistent or incomplete without the common data record, i.e., DR3. In such cases, the data stored in the database consists of the combination of all distinct data records and the subset of one or more common data records. This is illustrated schematically in FIG.1C. In this figure, the data records stored in the database 100 are divided into two partitions 121 and 122. Each of the two partitions comprises a subset of distinct data records 101 and 102, respectively, as well as a subset 103 of data records that is common to both partitions 121 and 122. The partition manager module thus stores the information describing the data records-to-partitions association. This information can be stored in the memory of the database management system 204. In the case the partition module comprises its own local memory, then this information can be stored therein.

The validation manager module 208, on the other hand, is responsible for handling the change requests, i.e., identifying validation rules for validating a given change request, applying the identified validation rules to the affected partitions to obtain validation results, and validating the obtained results to determine whether the requested change preserve the integrity of the stored data. Similar to the partition module, the validation module comprises means for performing its functionality. The partition module may thus be implemented as a specific circuitry, i.e., a hardware-only implementation, or as a combination of a hardware and software. In the latter case, the validation module may be provided with a local memory. In that case, the validation module may store any information such as the validation rules and the validation results required for its proper operation in its local memory.

In some embodiments, the apparatus for validating a change request into the database corresponds to the validation manager module 208. In another more complex implementation, the apparatus may further comprise the partition manager module 206. In other words, the apparatus comprises means to perform the functionality of the validation manager module and, optionally, additional means configured to perform the functionality of the partitioning manager module.

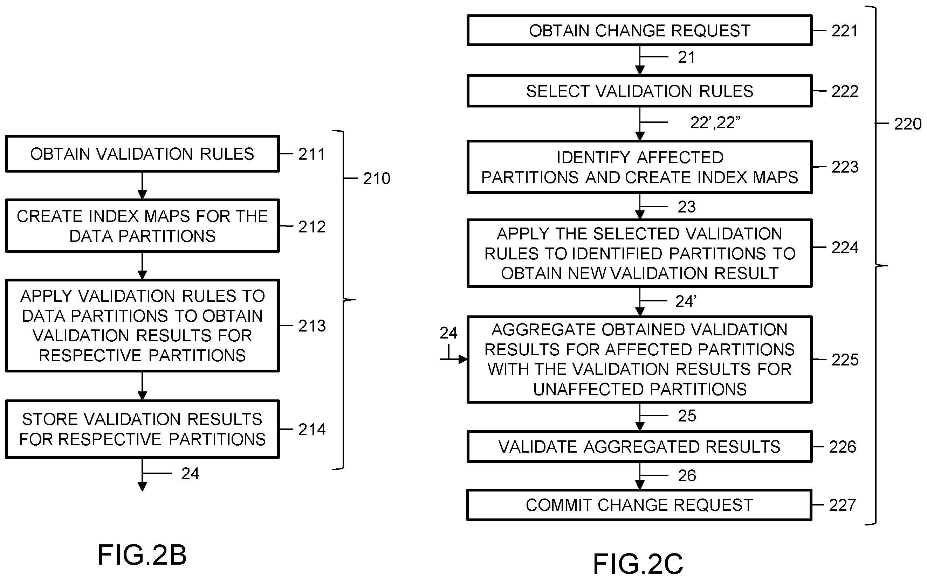

The apparatus of the database management system 204 and its operation will be now described in detail with reference to FIG.2B and FIG.2C. FIG.2B shows steps performed by the apparatus of the database management system for initializing the validation manager module, and FIG.2C shows steps performed by the apparatus of the database management system for validating requested changes in the database.

As described above, a datastore stores network configuration data in the form of data records in accordance with the NETCONF protocol. The NETCONF protocol encodes the configuration data in an XML format. Thus, the data records will represent XML-encoded configuration data. To initialize the datastore, XML encoded messages comprising the network configuration data are sent to the database management system 204 to populate datastore 202 with the initial data. The database management system 204 processes the messages to extract the XML-encoded configuration data. The database management system 204 then stores configuration data in the datastore. Once the datastore is created, the partition manager 206 divides the data records into partitions as described above with reference to FIG.2A and FIG.1C. The partitioning can be performed by any conventional techniques suitable for the purpose.

Once, the datastore is created and the data records are partitioned, the validation manager module 208 is initialized 210. To do so, the validation manager module 208 obtains 211 the validation rules required for validating the stored data from the memory of the management system 204. An example of a validation rule is a conditional expression such as an if-else statement which once applied to the stored data evaluates to a validation result. The obtained validation result is then verified if satisfies a validation condition. For example, the validation result is compared to a range or a threshold value to verify if the result has a value within a desired or allowed range. The validation condition is thus also a conditional expression that captures the logic to determine whether a validation rule has passed the evaluation based on the validation result. The validation condition is thus expressed in the format and content specific to the validation rule. The result of evaluating the validation condition is a validation conclusion. The conclusion can also be defined in the form of an expression, for example, a 'pass' or 'fail'. The validation rules and the validation conditions are defined specifically for validating the data stored in the datastore. The validation rules and conditions can be defined in various ways. For example, a communication network expert can formulate validation rules and conditions for validating the network configuration data. Further, a data modelling language such as the Yet Another Next Generation, YANG, can be used to define additional validation rules and conditions. For example, the YANG model can be used to define validation rules and conditions for inspecting the referential integrity of the data. Furthermore, a complex logic may be used to realize a network automation layer for assisting the datastore operator in the creation of the validation rules and conditions. The network automation layer enables less user intervention in the creation of the validation rules and conditions and can be implemented as a software component. Furthermore, a trained artificial intelligence, AI, module could be used to process the stored data to derive other validation rules and conditions. For the stored data record shown in FIG.1A and FIG.1B, a validation rule could for example evaluate if a maximum bandwidth is defined for a TDP and the validation condition could verify if the validation result is true.

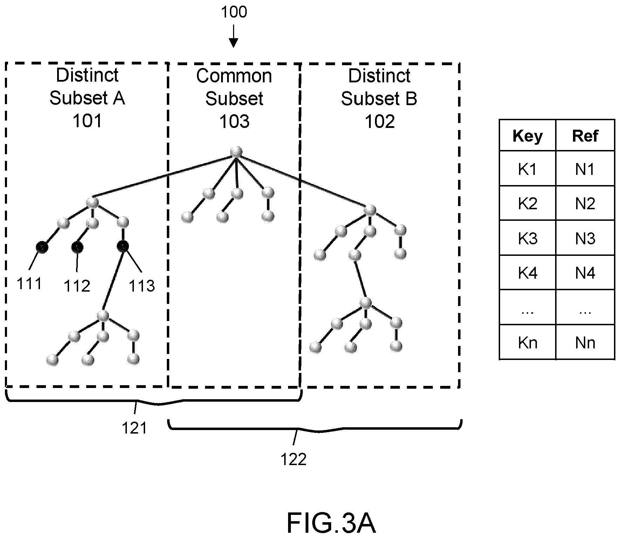

Differently from the conventional solutions, herein, the validation rules r with *r* ∈ {1, ..., *R*} are applied to the respective partitions *p* with *p* ∈ {1, ..., *P*}. In other words, the validation rules are applied on a partition-per-partition basis. To do so, index maps *map_{p,r}* are created 212 for the respective partitions *p* and the respective validation rules r. This is equivalent to generating a set of indices or keys, i.e., K1, K2..., Kn, each associated with a pointer referencing a specific node, i.e., N1, N2, ..., Nn, in the graph representation as shown in FIG.3A. Using index maps for applying the validation rules is not mandatory per se but allows accessing the stored data quickly, especially if stored data is subsequently accessed. Once, the index maps are created, the validation rules are applied 213 to the respective partitions using the index maps. For example, the partitions are evaluated one by one in a subsequent order, or evaluated in parallel, by applying all validation rules to a respective partition. The evaluation may be parallelized in two ways. One way would be to perform the evaluation of the respective partitions concurrently with the validation rules being applied in a sequential order. Another way could be to both concurrently evaluate the partitions and concurrently apply the validation rules. As a result, a validation result *res_{p,r}* is obtained for each partition *p* and each validation rule *r.* A validation result may be empty or blank if, for example, the validation rule does not apply to the data of a specific partition. For example, if the partition does not describe a TDP but the validation rule checks the total number of configured TDPs, then the result of applying this rule to the partition will be empty. Finally, the obtained validation results *res_{p,r}* 24 are stored in the memory of the database management system 204.

Optionally, during the initialization of the validation management module 208, the validation module 208 may validate the validation results 24. To do so, the validation module 208 aggregates the validation results *res_{p,r}* across the partitions to obtain an aggregated validation result *agg_resᵣ* for the respective validation rules *r.* The aggregated validation results *agg_resᵣ* are then evaluated with respect to their respective validation condition *cᵣ* with *r* ∈ {1, ... , *R*}. If the validation condition *cᵣ* is satisfied, the thus successfully validated aggregated result *agg_resᵣ* may also be stored in the memory of the database management system 204. As initial configuration data is normally defined so that all validation conditions are satisfied, the resulting conclusions are expected to all result in 'pass'.

Once the initialization of the validation management module 208 is completed, the validation management module is ready to perform validation of any changes requested to the database. As described above, a change request may, for example, be a request to add new data records describing an additional TDP or to delete the data records describing a stored TDP profile, and so on. If a TDP profile is to be added, the change request will contain information describing the additional TDP profile.

Thus, upon obtaining 221 a change request 21, the validation management module 208 parses the change request to identify the types of data records being affected and thus changed. Any suitable for this purpose parsing techniques can be employed. For example, if the parsing identifies that the change request adds a TDP, the validation module 208 can then identify that a TDP is a specific quality-of-service, QoS, profile for a broadband network. The validation manager then uses this information to select 222 one or more validation rules 22' from the complete set of rules which can be used for validating such a QoS profile for a broadband network. One such validation rule could check if "maximum bandwidth" is defined for this TDP, while another validation rule could check if a jitter tolerance is defined, and, if so, if the jitter tolerance is set to a value below a pre-defined maximum value. In other words, the association of the validation rules to the types of data records allows for the selection of the rules relevant for the validation of the requested change. This association employs the concept of scopes where a scope defines which validation rules are associated with a particular scope and, hence, type of data records. For example, in the case of a NETCONF datastore, a generic scope can be defined for validating a communication interface and different specific scopes can be defined for validating the different types of communication interfaces. One specific scope could be, thus, defined for a logical interface, another scope for a virtual interface, and so on. Thus, the definition of the validation rule scopes also allows for a partial and even a complete overlap between the scopes. Otherwise said, each validation rule points to a set of validation scopes and each validation scope defines a set of filtering criteria. The change request can then be filtered using the filtering criteria defined by each scope. If any filtering criterion of a scope is met, then this scope is identified as relevant and the validation rules pointing to that scope are in turn selected.

For example, a generic scope S1 overlapping specific scopes S11 and S12 will contain the validation rules associated with the specific scopes S11 and S12 and, possibly, as well as other validation rules not associated with the specific scopes, where some of the validation rules associated with the specific scope S11 may also be associated with the specific scope S12. The validation rule scopes thus form a hierarchical or a tree-like structure which allows a precise selection of the rules required for validating the change request. The association between validation rules and scopes can be stored in the form of a look-up table in the memory of the database management module 204 or the local memory of the validation module.

Once, the validation rules 22' are selected, the database management module 204 proceeds to apply the requested changed to obtain a modified copy of the database, i.e., a candidate database. During the candidate database creation, the partition module 206 keeps track of the modifications made to the actual database, i.e., the running database. Doing so, the partition manager 208 identifies 223 which partitions have been affected by the requested change. As described above, the requested change may introduce modifications in one or more already existing partitions by, for example, adding, modifying, or deleting one or more data records, or adding, deleting one or more partitions. In either case, the partition manager 206 will identify these partitions as affected partitions 23. The partition manager then informs the validation manager which partitions are affected by the requested change.

The validation module 208 then proceeds to apply 224 the selected validation rules 22' to the affected partitions 23 in the same manner as described above with reference to FIG.2B. More specifically, index maps are created as described above but only for the affected partitions *p'* and for the selected validation rules *r'.* These index maps *map_{p',r'}* are then used to apply the selected validation rules *r'* to the data records of the affected partitions *p'* in the candidate database. As a result, new validation results *new_res_{p',r'}* 24' for the respective affected partitions and respective selected validation rules r' are obtained. Similar to step 212 described above, using index maps for applying the validation rules is not mandatory per se but allows accessing the stored data quickly, especially if stored data is subsequently accessed. Next, the validation module 208 proceeds to aggregate 225 the new validation results *new_res_{p',r'}* 24' with the validation results *res*_{*p*≠*p',r'*} 24 for the respective validation rules for the unaffected partitions, i.e., *p* ≠ *p'.* For this purpose, the validation module 208 retrieves the validation results *res_{p≠p',r'}* 24 from the memory where the initial validation results are stored. The aggregation is performed in the same way as described above with reference to FIG.2B. New aggregated validation results *new_agg_res_{r'}* 25 are thus obtained for the respective selected validation rules *r'.*

Next, the validation module 208 evaluates the new aggregated results with respect to their respective validation conditions *c_{r'}* 22". If all validation conditions are satisfied, i.e., the result or the conclusion 26 of the evaluation is positive or a 'pass', then the requested changes are committed 227 to the running database. Together with committing the requested change, the validation module 208 stores the new validation results 24' for the affected partitions, i.e., the stored initial validation results for the respective selected rules and the respective affected partitions are overwritten with the new results. If, however, at least one of the validation conditions is not satisfied, i.e., there is at least one 'fail' conclusion, then the requested change is not committed to the running database and the initial validation results remain unchanged.

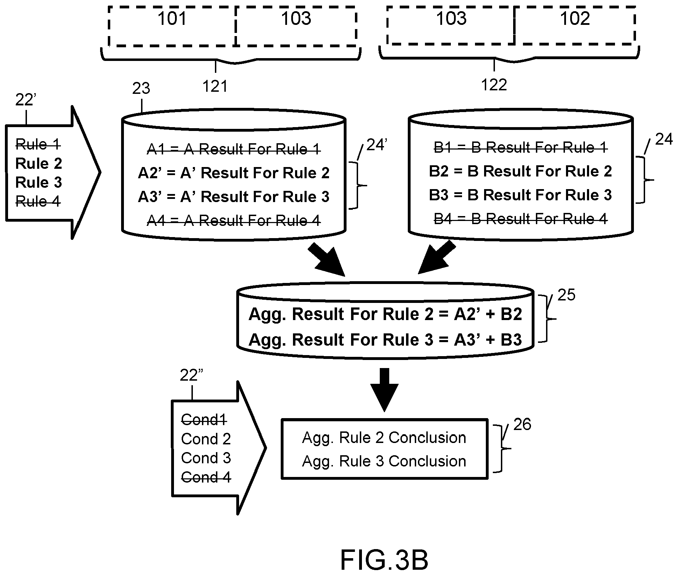

The validation of a change request will be now explained using the example shown in FIG.3A and FIG.3B. FIG.3A shows a database with data records divided into two partitions 121 and 122 and data records 111 to 113 identified by the validation module 208 as being modified by the obtained change request and FIG.3B shows schematically the steps performed by the validation module to validate the change request affecting these data records. As the change request affects only the data records in the distinct subset 101 of the partition, the validation module 208 identifies only partition 121 as the affected partition 23. After parsing the change request, the validation module 208 identifies the validation rules associated with validation rule scope, i.e., Scope 2_3 with validation rules Rule 2 and Rule 3, to be relevant for evaluating the obtained change request. The validation module thus retrieves from the memory the validation rules 22', i.e., Rule 2 and Rule 3. At the same time, the validation module also retrieves the validation conditions 22", i.e., Cond 2 and Cond 3, associated with the selected validation rules 22'. The validation module 208 then applies the validation rules 22' to the affected partition and obtains the new validation results, i.e. A2' and A3' for Rule 2 and Rule 3, respectively. The new validation results A2' and A3' for the affected partition are then aggregated with the stored validation results 24 for the unaffected partition 122, i.e., results B2 and B3. The respective validation conditions 22", i.e., Cond 2 and Cond 3, are then applied to the new aggregated results 25 to determine the validation conclusion 26. If conclusions for both conditions are positive, the requested change is committed and the new validation results 24' for Rule 2 and Rule 3 are stored in the memory of the database management module 204 or the memory of the validation module 208.

In some cases, the obtained validation results need not be aggregated. This may be the case when the validation rules checks if the stored configurations do not exceed a given limit. For example, if the TDPs do not exceed a pre-defined limit. Another example could be when the new data record points to a non-existing configuration, i.e., the referential integrity of the data is breached. Another example is when a validation rule checks if a certain requirement is satisfied at a partition level, i.e., when a rule checks if a given limit is respective by individual partitions. In such scenarios, the validation module skips the aggregation step 225 and proceeds directly to validate 226 the obtained validation results 24' in the same manner as described above. As soon as the validation for any partition fails, the validation conclusion for all partitions is concluded as negative, and, vice versa, the validation conclusion is successful only if the validation condition is respected for all partitions. That is, if all validation conclusions 26 are positive, the requested change is committed and the new validation results 24' are stored in the memory of the database management module 204 or the memory of the validation module 204.

In the case, the change request modifies a data record in the common subset 103, the validation will be performed in the same ways as above with the difference that the validation of the change request is evaluated only once. More specifically, the affected partitions will be identified 223 in the same way as described above with reference to FIG.2C. In this case, however, both partitions 121 and 122 will be identified as affected since they both comprise the changed data record, i.e., the affected common subset. After parsing the change request, the validation module 208 selects 222 the validation rules associated with the scope for evaluating the obtained change request. Again, this step is done in the same way as described above. The selected validation rules are also applied 224 to the affected partitions on partition basis in the same way as described above. However, once the validation results for the affected partitions are obtained, the validation module proceeds immediately to the validation step 226, i.e., the aggregation step 225 is skipped. The validation module then runs the validation conditions associated with the respective validation rules on the validated results for one of the affected partitions e.g., on the validation results for partition 121. If the resulting the validation conclusions are passed, then the requested change is committed and the validation results for the respective affected partitions are stored in the memory of the database management module 204 or the memory of the validation module 204.

It is important to note that to preserve the data integrity, e.g., the referential integrity, each partition is formed as a coherent set of data records. However, it is possible that a distinct data record may point to a common data record using a reference. For this reference to be resolvable, both distinct and common data records must be evaluated together in the partition. Because of that, it is important that validation rules are always evaluated against all data records in a partition and not against a subset, e.g., the distinct subset or the common subset.

The validation results may be stored in various ways. For example, the validation results for the respective partition and the respective validation rules may be stored in the form of a look-up table. The look-up table may be organized to first indicate the index of the partition *p_{idx},* then the index of the validation rule *r_{idx},* and then the value of the validation result *res_{p,r},* i.e., {*p_{idx}, r_{idx}, res_{p,r}*}*.* The indices may be an integer value, or a string. In some case, the look-up table can be augmented to additionally specify the type of the data records *t* ∈ {1, ..., *T*} to which the validation results relate. For example, if a partition comprises data records for different network interfaces or network components, then the look-up table may be organized as {*p_{idx}, r_{idx}, t_{idx}, res_{p,r}*}*.* Furthermore, the look-up table may further include the aggregated results for a particular validation rule. In such case, the look-up table is augmented as follows {*"aggregated", r_{idx}, res_{p,r}*} or {*"aggregated", r_{idx}, t_{idx}, res_{p,r}*}*.* In this case, the first file indicates that the record in the look-up table indicates the relevant validation rule index and the value of the aggregated validation result for that rule. The aggregated validation results are stored in the memory temporarily to allow evaluation of the validation conditions. After the validation conclusions are obtained, the aggregated results are deleted from the memory.

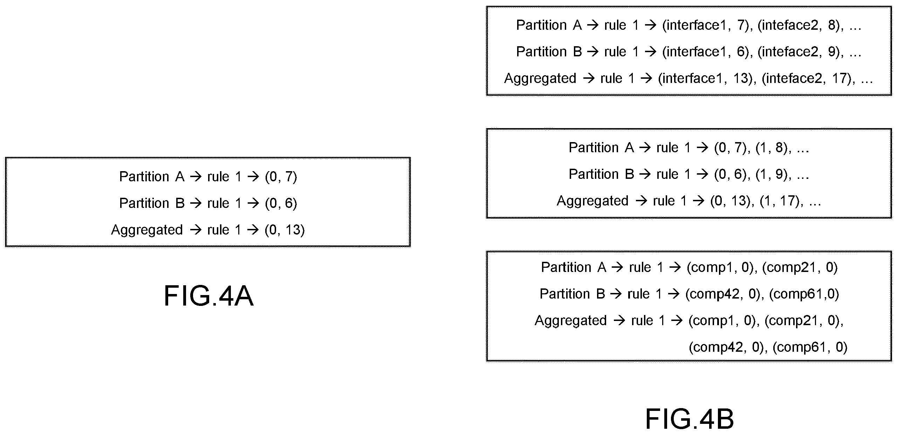

FIG.4A shows a look-up table using the format {*p_{idx}, r_{idx}, resp,r}.* In this example, the validation result is a single numeric value, and the validation rule is defined as an index. The numeric values are then added to obtain the aggregated result for the validation rule. FIG.4B shows three examples of look-up table using the format {*p_{idx}, r_{idx}, t_{idx}, re_{sp,r}*}*.* The top two examples show the same look-up table with the type of the data records given in a string format, i.e., 'interface1', 'interface2', and so on, and in a numeric format as an index, i.e., 0, 1, ..., and aggregated results corresponding to the sum of the validation results per data record type. The third example shows a look-up table using the format of the first two examples. Herein, however, the summation of the validation results is not performed. Instead, the aggregated validation result is given a list comprising all validation results for that validation rule.

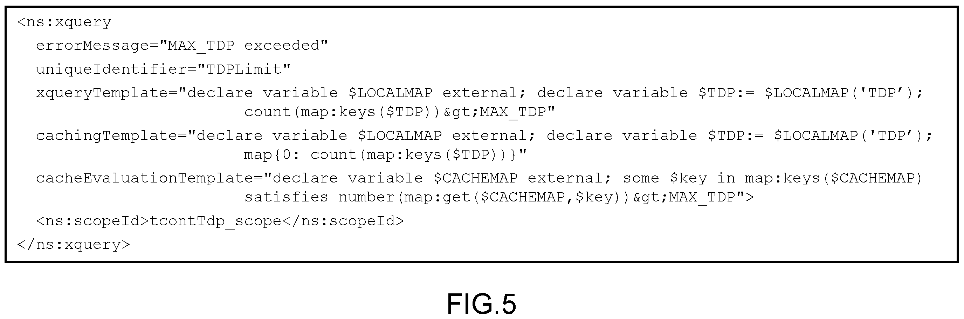

FIG.5 shows a complete example of a validation rule, a validation conclusion, and the format used to store the validation result in the memory. As it can be seen in the figure, the validation rule determines the total number of the TDP recorded in the database, while the validation conclusion checks if the total number does not exceed a pre-defined limit, i.e., MAX_TDP. The validation result is then stored in the memory in the format as indicated in the *"cacheTemplate".*

The XQuery *"xqueryTemplate"* expression of FIG.4 can be used to pass or fail the validation rule immediately if, for example, the TDP is defined in common subset 103. Alternately, assuming that the TDP is defined in data records present in the distinct subsets of each partition, then the validation results for the respective partitions are stored using *"cachingTemplate"* expression. The results are stored in the format *"map*{0: *count*(*map*: *keys*($*TDP*))}"*.* Only a single value per partition is cached at index 0, given that there is only one value cached in simple map, i.e. (0,value). The validation results are then aggregated validated to obtain a pass or fail validation conclusion using the validation condition expression defined in the *"cacheEvaluationTemplate".* As there is only one index 0, *"some* $*key"* simply checks if the value at index 0 exceeds the limit MAX_TDP, i.e., if the sum(results from all partitions) > MAX_TDP. The MAX_TDP is a parameter which may be set to have to 10, i.e., a maximum of 10 TDPs are allowed.

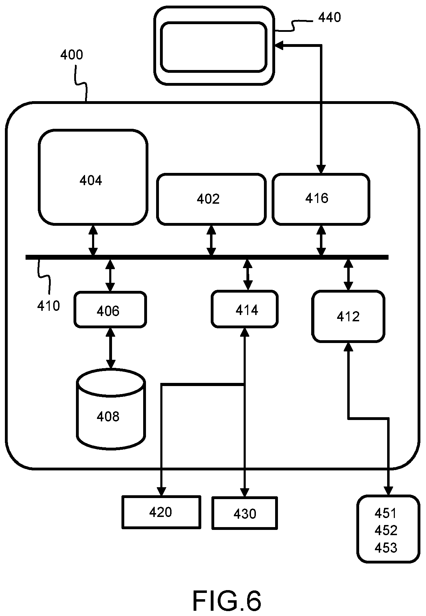

FIG.6 shows a suitable computing system 400 enabling embodiments of the method for validating a request for change of a database according to the present disclosure. Computing system 400 may, in general, be formed as a suitable general-purpose computer and comprise a bus 410, a processor 402, a local memory 404, one or more optional input interfaces 414, one or more optional output interfaces 416, a communication interface 412, a storage element interface 406, and one or more storage elements 408. Bus 410 may comprise one or more conductors that permit communication among the components of the computing system 400. Processor 402 may include any type of conventional processor or microprocessor that interprets and executes programming instructions. Local memory 404 may include a random-access memory, RAM, or another type of dynamic storage device that stores information and instructions for execution by processor 402 and/or read-only memory, ROM, or another type of static storage device that stores static information and instructions for use by processor 402. Input interface 414 may comprise one or more conventional mechanisms that permit an operator or user to input information to the computing device 400, such as a keyboard 420, a mouse 430, a pen, voice recognition, and/or biometric mechanisms, a camera, etc. Output interface 416 may comprise one or more conventional mechanisms that output information to the operator or user, such as a display 440, etc. Communication interface 412 may comprise any transceiver-like mechanism such as for example one or more Ethernet interfaces that enables computing system 400 to communicate with other devices and/or systems, for example with other computing devices 451, 452, 453. The communication interface 412 of computing system 400 may be connected to such another computing system by means of a local area network, LAN, or a wide area network, WAN, such as for example the internet. Storage element interface 606 may comprise a storage interface such as for example a Serial Advanced Technology Attachment, SATA, interface or a Small Computer System Interface, SCSI, for connecting bus 410 to one or more storage elements 408, such as one or more local disks, for example, SATA disk drives, and control the reading and writing of data to and/or from these storage elements 408. Although the storage element(s) 408 above is/are described as a local disk, in general, any other suitable computer-readable media such as a removable magnetic disk, optical storage media such as a CD or DVD, -ROM disk, solid state drives, flash memory cards, ... could be used. The computing system 400 could thus correspond to the circuitry of the apparatus according to the present disclosure.

In summary, embodiments of the present disclosure enable validation of the requested changes or modifications on partition basis, i.e., re-validation of the affected partitions only, thus, drastically improving the time and computational efficiency of the validation process. Furthermore, embodiments of the present disclosure enable a data-driven validation of the requested changes, i.e., the validation rules and validation conditions are defined for validating respective types of data. This, in turn, allows for increased flexibility in the validation rules and conditions definition, i.e., the scientist or the expert having good understanding of the data to be stored, can define any validation rule for inspecting various requirements required to preserve the data integrity and so on. In other words, the validation rules and conditions can be adapted to the data specifics on the fly without having to modify the validation process itself.

Although embodiments of the present disclosure are described with reference to datastores which are an example of a database, the present disclosure can be readily applied to validating changes or modifications in any type of databases by simply adapting the validation rules and conditions to the data specifics.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example, and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions.

## Claims

1. An apparatus comprising means configured to perform:
- obtaining (221) a request for modifying data records stored in a database; the data records being divided into partitions;
- selecting (222), from a pre-defined set of validation rules, a subset of validation rules based on the obtained request, the subset of validation rules comprising one or more validation rules (22');
- identifying (223) at least one partition (121) affected by the obtained request;
- applying (224) the one or more validation rules (22') of the subset to the at least one affected partition (121), thereby obtaining validation results (24') for respective one or more validation rules for the at least one affected partition (121);
- aggregating (225), the validation results (24') for the at least one affected partition with validation results (24) for the respective validation rules of the subset for unaffected partitions, thereby obtaining aggregated validation results (25) for the respective validation rules of the subset; and
- validating (226), the aggregated results (25) by means of validation conditions (22") associated with the respective validation rules of the subset;
and wherein the means are further configured to perform said identifying (223) by deriving index maps expression associated to the one or more validation rules of the subset and creating the corresponding index maps from the data records of the at least one affected partition, thereby obtaining index maps mapping the data records of the at least one affected partition to respective indexes, and, wherein the means are further configured for performing said applying (224) by applying the one or more validation rules of the subset to the respective data records by means of the index maps, thereby obtaining validation results for the respective validation rules per partition.

2. The apparatus according to claim 1, wherein the means are further configured to perform said selecting (222) by deriving, from the obtained request, type of data records affected by the request, and, by identifying, from the pre-defined set of validation rules, one or more validation rules associated with the affected type of data records.

3. The apparatus according to claims 1 or 2, wherein the means are further configured to perform said identifying (223) by applying the obtained request to the stored data thereby obtaining modified data, and, identifying, therefrom, the at least one affected partition.

4. The apparatus according to any one of the preceding claims, wherein the means are further configured to perform said aggregating (225) by retrieving the validation results (24) for the respective validation rules of the subset for the unaffected partitions.

5. The apparatus according to any one of the preceding claims, wherein the means are further configured to perform storing (227) the modified data and the new validation results (24') for the at least one affected partition.

6. The apparatus according to any one of the preceding claims, wherein the partitions comprise at least one distinct data record (101; 102).

7. The apparatus according to any one of the preceding claims, wherein the means are further configured to perform applying (213) the pre-defined set of validation rules to the respective partitions, thereby obtaining initial validation results, and storing (214) the initial validation results.

8. The apparatus according to any one of the preceding claims, wherein the stored data comprises configuration data for a network device.

9. The apparatus according to any one of the preceding claims, wherein the apparatus forms part of a database management system (204).

10. The apparatus according to claim 9, wherein the database management system (204) is a query-based management system.

11. A method (220) comprising:
- obtaining (221) a request for modifying data records stored in a database; the data records being divided into partitions;
- selecting (222), from a pre-defined set of validation rules, a subset of validation rules based on the obtained request, the subset of validation rules comprising one or more validation rules (22');
- identifying (223) at least one partition (121) affected by the obtained request;
- applying (224) the one or more validation rules (22') of the subset to the at least one affected partition (121), thereby obtaining validation results (24') for respective one or more validation rules for the at least one affected partition (121);
- aggregating (225), the validation results (24') for the at least one affected partition with validation results (24) for the respective validation rules of the subset for unaffected partitions, thereby obtaining aggregated validation results (25) for the respective validation rules of the subset; and
- validating (226), the aggregated results (25) by means of validation conditions (22") associated with the respective validation rules of the subset;
and wherein the method further comprises performing said identifying (223) by deriving index maps expression associated to the one or more validation rules of the subset and creating the corresponding index maps from the data records of the at least one affected partition, thereby obtaining index maps mapping the data records of the at least one affected partition to respective indexes, and performing said applying (224) by applying the one or more validation rules of the subset to the respective data records by means of the index maps, thereby obtaining validation results for the respective validation rules per partition.

12. A computer program product comprising computer-executable instructions for causing a computer to perform at least the following:
- obtaining (221) a request for modifying data records stored in a database; the data records being divided into partitions;
- selecting (222), from a pre-defined set of validation rules, a subset of validation rules based on the obtained request, the subset of validation rules comprising one or more validation rules (22');
- identifying (223) at least one partition (121) affected by the obtained request;
- applying (224) the one or more validation rules (22') of the subset to the at least one affected partition (121), thereby obtaining validation results (24') for respective one or more validation rules for the at least one affected partition (121);
- aggregating (225), the validation results (24') for the at least one affected partition with validation results (24) for the respective validation rules of the subset for unaffected partitions, thereby obtaining aggregated validation results (25) for the respective validation rules of the subset; and
- validating (226), the aggregated results (25) by means of validation conditions (22") associated with the respective validation rules of the subset;
and wherein the identifying (223) comprises deriving index maps expression associated to the one or more validation rules of the subset and creating the corresponding index maps from the data records of the at least one affected partition, thereby obtaining index maps mapping the data records of the at least one affected partition to respective indexes, and wherein the applying (224) comprises applying the one or more validation rules of the subset to the respective data records by means of the index maps, thereby obtaining validation results for the respective validation rules per partition.

13. A computer readable storage medium comprising computer-executable instructions for causing a computer to perform at least the following:
- obtaining (221) a request for modifying data records stored in a database, the data records being divided into partitions;
- selecting (222), from a pre-defined set of validation rules, a subset of validation rules based on the obtained request, the subset of validation rules comprising one or more validation rules (22');
- identifying (223) at least one partition (121) affected by the obtained request;
- applying (224) the one or more validation rules (22') of the subset to the at least one affected partition (121), thereby obtaining validation results (24') for respective one or more validation rules for the at least one affected partition (121);
- aggregating (225), the validation results (24') for the at least one affected partition with validation results (24) for the respective validation rules of the subset for unaffected partitions, thereby obtaining aggregated validation results (25) for the respective validation rules of the subset; and
- validating (226), the aggregated results (25) by means of validation conditions (22") associated with the respective validation rules of the subset;
and wherein the identifying (223) comprises deriving index maps expression associated to the one or more validation rules of the subset and creating the corresponding index maps from the data records of the at least one affected partition, thereby obtaining index maps mapping the data records of the at least one affected partition to respective indexes, and wherein the applying (224) comprises applying the one or more validation rules of the subset to the respective data records by means of the index maps, thereby obtaining validation results for the respective validation rules per partition.

## Patentansprüche

1. Einrichtung, die Mittel umfasst, die dazu ausgelegt sind, Folgendes durchzuführen:
- Erhalten (221) einer Anforderung zum Modifizieren von Datensätzen, die in einer Datenbank gespeichert sind; wobei die Datensätze in Partitionen geteilt sind;
- Auswählen (222) eines Untersatzes von Validierungsregeln auf Basis der erhaltenen Anforderung aus einem vordefinierten Satz von Validierungsregeln, wobei der Untersatz von Validierungsregeln eine oder mehrere Validierungsregeln (22') umfasst;
- Identifizieren (223) von mindestens einer Partition (121), die von der erhaltenen Anforderung betroffen ist;
- Anwenden (224) der einen oder der mehreren Validierungsregeln (22') des Untersatzes auf die mindestens eine betroffene Partition (121), dadurch Erhalten von Validierungsergebnissen (24') für eine oder mehrere jeweilige Validierungsregeln für die mindestens eine betroffene Partition (121) ;
- Aggregieren (225) der Validierungsergebnisse (24') für die mindestens eine betroffene Partition mit Validierungsergebnissen (24) für die jeweiligen Validierungsregeln des Untersatzes für nicht betroffene Partitionen, dadurch Erhalten von aggregierten Validierungsergebnissen (25) für die jeweiligen Validierungsregeln des Untersatzes; und
- Validieren (226) der aggregierten Ergebnisse (25) mittels Validierungsbedingungen (22"), die mit den jeweiligen Validierungsregeln des Untersatzes verknüpft sind;
und wobei die Mittel ferner dazu ausgelegt sind, das Identifizieren (223) durch Ableiten eines Indexkartenausdrucks, der mit der einen oder den mehreren Validierungsregeln des Untersatzes verknüpft ist, und Erstellen der jeweiligen Indexkarten aus den Datensätzen der mindestens einen betroffenen Partition durchzuführen, dadurch Erhalten von Indexkarten, die die Datensätze der mindestens einen betroffenen Partition jeweiligen Indices zuordnen, und wobei die Mittel ferner dazu ausgelegt sind, durch Anwenden der einen oder der mehreren Validierungsregeln des Untersatzes auf die jeweiligen Datensätze mittels der Indexkarten das Anwenden (224) durchzuführen, dadurch Erhalten von Validierungsergebnissen für die jeweiligen Validierungsregeln pro Partition.

2. Einrichtung nach Anspruch 1, wobei die Mittel ferner dazu ausgelegt sind, durch Ableiten einer Art von Datensätzen, die von der Anforderung betroffen sind, aus der erhaltenen Anforderung und durch Identifizieren von einer oder mehreren Validierungsregeln, die mit der betroffenen Art von Datensätzen verknüpft sind, aus dem vordefinierten Satz von Validierungsregeln, das Auswählen (222) durchzuführen.

3. Einrichtung nach Anspruch 1 oder 2, wobei die Mittel ferner dazu ausgelegt sind, durch Anwenden der erhaltenen Anforderung auf die gespeicherten Daten, dadurch Erhalten von modifizierten Daten, und Identifizieren der mindestens einen betroffenen Partition davon das Identifizieren (223) durchzuführen.

4. Einrichtung nach einem der vorhergehenden Ansprüche, wobei die Mittel ferner dazu ausgelegt sind, durch Abrufen der Validierungsergebnisse (24) für die jeweiligen Validierungsregeln des Untersatzes für die nicht betroffenen Partitionen das Aggregieren (225) durchzuführen.

5. Einrichtung nach einem der vorhergehenden Ansprüche, wobei die Mittel ferner dazu ausgelegt sind, das Speichern (227) der modifizierten Daten und der neuen Validierungsergebnisse (24') für die mindestens eine betroffene Partition durchzuführen.

6. Einrichtung nach einem der vorhergehenden Ansprüche, wobei die Partitionen mindestens einen eindeutigen Datensatz (101; 102) umfassen.

7. Einrichtung nach einem der vorhergehenden Ansprüche, wobei die Mittel ferner dazu ausgelegt sind, das Anwenden (213) des vordefinierten Satzes von Validierungsregeln auf die jeweiligen Partitionen, dadurch Erhalten von anfänglichen Validierungsergebnissen, und Speichern (214) der anfänglichen Validierungsergebnisse durchzuführen.

8. Einrichtung nach einem der vorhergehenden Ansprüche, wobei die gespeicherten Daten Auslegungsdaten für eine Netzwerkvorrichtung umfassen.

9. Einrichtung nach einem der vorhergehenden Ansprüche, wobei die Einrichtung einen Teil eines Datenbankverwaltungssystems (204) bildet.

10. Einrichtung nach Anspruch 9, wobei das Datenbankverwaltungssystem (204) ein abfragebasiertes Verwaltungssystem ist.

11. Verfahren (220), das Folgendes umfasst:
- Erhalten (221) einer Anforderung zum Modifizieren von Datensätzen, die in einer Datenbank gespeichert sind; wobei die Datensätze in Partitionen geteilt sind;
- Auswählen (222) eines Untersatzes von Validierungsregeln auf Basis der erhaltenen Anforderung aus einem vordefinierten Satz von Validierungsregeln, wobei der Untersatz von Validierungsregeln eine oder mehrere Validierungsregeln (22') umfasst;
- Identifizieren (223) von mindestens einer Partition (121), die von der erhaltenen Anforderung betroffen ist;
- Anwenden (224) der einen oder der mehreren Validierungsregeln (22') des Untersatzes auf die mindestens eine betroffene Partition (121), dadurch Erhalten von Validierungsergebnissen (24') für eine oder mehrere jeweilige Validierungsregeln für die mindestens eine betroffene Partition (121) ;
- Aggregieren (225) der Validierungsergebnisse (24') für die mindestens eine betroffene Partition mit Validierungsergebnissen (24) für die jeweiligen Validierungsregeln des Untersatzes für nicht betroffene Partitionen, dadurch Erhalten von aggregierten Validierungsergebnissen (25) für die jeweiligen Validierungsregeln des Untersatzes; und
- Validieren (226) der aggregierten Ergebnisse (25) mittels Validierungsbedingungen (22"), die mit den jeweiligen Validierungsregeln des Untersatzes verknüpft sind;
und wobei das Verfahren ferner das Durchführen des Identifizierens (223) durch Ableiten eines Indexkartenausdrucks, der mit der einen oder den mehreren Validierungsregeln des Untersatzes verknüpft ist, und Erstellen der jeweiligen Indexkarten aus den Datensätzen der mindestens einen betroffenen Partition, dadurch Erhalten von Indexkarten, die die Datensätze der mindestens einen betroffenen Partition jeweiligen Indices zuordnen, und das Durchführen des Anwendens (224) durch Anwenden der einen oder der mehreren Validierungsregeln des Untersatzes auf die jeweiligen Datensätze mittels der Indexkarten, dadurch Erhalten von Validierungsergebnissen für die jeweiligen Validierungsregeln pro Partition, umfasst.

12. Computerprogrammprodukt, das computerausführbare Anweisungen zum Bewirken, dass ein Computer mindestens Folgendes durchführt, umfasst:
- Erhalten (221) einer Anforderung zum Modifizieren von Datensätzen, die in einer Datenbank gespeichert sind; wobei die Datensätze in Partitionen geteilt sind;
- Auswählen (222) eines Untersatzes von Validierungsregeln auf Basis der erhaltenen Anforderung aus einem vordefinierten Satz von Validierungsregeln, wobei der Untersatz von Validierungsregeln eine oder mehrere Validierungsregeln (22') umfasst;
- Identifizieren (223) von mindestens einer Partition (121), die von der erhaltenen Anforderung betroffen ist;
- Anwenden (224) der einen oder der mehreren Validierungsregeln (22') des Untersatzes auf die mindestens eine betroffene Partition (121), dadurch Erhalten von Validierungsergebnissen (24') für eine oder mehrere jeweilige Validierungsregeln für die mindestens eine betroffene Partition (121) ;
- Aggregieren (225) der Validierungsergebnisse (24') für die mindestens eine betroffene Partition mit Validierungsergebnissen (24) für die jeweiligen Validierungsregeln des Untersatzes für nicht betroffene Partitionen, dadurch Erhalten von aggregierten Validierungsergebnissen (25) für die jeweiligen Validierungsregeln des Untersatzes; und
- Validieren (226) der aggregierten Ergebnisse (25) mittels Validierungsbedingungen (22"), die mit den jeweiligen Validierungsregeln des Untersatzes verknüpft sind;
und wobei das Identifizieren (223) das Ableiten eines Indexkartenausdrucks, der mit der einen oder den mehreren Validierungsregeln des Untersatzes verknüpft ist, und das Erstellen der jeweiligen Indexkarten aus den Datensätzen der mindestens einen betroffenen Partition umfasst, dadurch Erhalten von Indexkarten, die die Datensätze der mindestens einen betroffenen Partition jeweiligen Indices zuordnen, und wobei das Anwenden (224) das Anwenden der einen oder der mehreren Validierungsregeln des Untersatzes auf die jeweiligen Datensätze mittels der Indexkarten umfasst, dadurch Erhalten von Validierungsergebnissen für die jeweiligen Validierungsregeln pro Partition.

13. Computerlesbares Speichermedium, das computerausführbare Anweisungen zum Bewirken, dass ein Computer mindestens Folgendes durchführt, umfasst:
- Erhalten (221) einer Anforderung zum Modifizieren von Datensätzen, die in einer Datenbank gespeichert sind; wobei die Datensätze in Partitionen geteilt sind;
- Auswählen (222) eines Untersatzes von Validierungsregeln auf Basis der erhaltenen Anforderung aus einem vordefinierten Satz von Validierungsregeln, wobei der Untersatz von Validierungsregeln eine oder mehrere Validierungsregeln (22') umfasst;
- Identifizieren (223) von mindestens einer Partition (121), die von der erhaltenen Anforderung betroffen ist;
- Anwenden (224) der einen oder der mehreren Validierungsregeln (22') des Untersatzes auf die mindestens eine betroffene Partition (121), dadurch Erhalten von Validierungsergebnissen (24') für eine oder mehrere jeweilige Validierungsregeln für die mindestens eine betroffene Partition (121) ;
- Aggregieren (225) der Validierungsergebnisse (24') für die mindestens eine betroffene Partition mit Validierungsergebnissen (24) für die jeweiligen Validierungsregeln des Untersatzes für nicht betroffene Partitionen, dadurch Erhalten von aggregierten Validierungsergebnissen (25) für die jeweiligen Validierungsregeln des Untersatzes; und
- Validieren (226) der aggregierten Ergebnisse (25) mittels Validierungsbedingungen (22"), die mit den jeweiligen Validierungsregeln des Untersatzes verknüpft sind;
und wobei das Identifizieren (223) das Ableiten eines Indexkartenausdrucks, der mit der einen oder den mehreren Validierungsregeln des Untersatzes verknüpft ist, und das Erstellen der jeweiligen Indexkarten aus den Datensätzen der mindestens einen betroffenen Partition umfasst, dadurch Erhalten von Indexkarten, die die Datensätze der mindestens einen betroffenen Partition jeweiligen Indices zuordnen, und wobei das Anwenden (224) das Anwenden der einen oder der mehreren Validierungsregeln des Untersatzes auf die jeweiligen Datensätze mittels der Indexkarten umfasst, dadurch Erhalten von Validierungsergebnissen für die jeweiligen Validierungsregeln pro Partition.

## Revendications

1. Appareil comprenant des moyens configurés pour effectuer :
- l'obtention (221) d'une demande de modification d'enregistrements de données stockés dans une base de données ; les enregistrements de données étant divisés en partitions ;
- la sélection (222), dans un ensemble prédéfini de règles de validation, d'un sous-ensemble de règles de validation sur la base de la demande obtenue, le sous-ensemble de règles de validation comprenant une ou plusieurs règles de validation (22') ;
- l'identification (223) d'au moins une partition (121) affectée par la demande obtenue ;
- l'application (224) des une ou plusieurs règles de validation (22') du sous-ensemble à l'au moins une partition (121) affectée, obtenant ainsi des résultats de validation (24') pour une ou plusieurs règles de validation respectives pour l'au moins une partition (121) affectée ;
- l'agrégation (225) des résultats de validation (24') pour l'au moins une partition affectée avec des résultats de validation (24) pour les règles de validation respectives du sous-ensemble pour des partitions non affectées, obtenant ainsi des résultats agrégés (25) de validation pour les règles de validation respectives du sous-ensemble ; et
- la validation (226) des résultats agrégés (25) au moyen de conditions de validation (22") associées aux règles de validation respectives du sous-ensemble ;
et dans lequel les moyens sont en outre configurés pour effectuer ladite identification (223) en dérivant une expression de cartes d'index associée aux une ou plusieurs règles de validation du sous-ensemble et en créant les cartes d'index correspondantes à partir des enregistrements de données de l'au moins une partition affectée, obtenant ainsi des cartes d'index mappant les enregistrements de données de l'au moins une partition affectée à des index respectifs, et dans lequel les moyens sont en outre configurés pour effectuer ladite application (224) en appliquant les une ou plusieurs règles de validation du sous-ensemble aux enregistrements de données respectifs au moyen des cartes d'index, obtenant ainsi des résultats de validation pour les règles de validation respectives par partition.

2. Appareil selon la revendication 1, dans lequel les moyens sont en outre configurés pour effectuer ladite sélection (222) en dérivant, à partir de la demande obtenue, un type d'enregistrements de données affecté par la demande, et en identifiant dans l'ensemble prédéfini de règles de validation une ou plusieurs règles de validation associées au type d'enregistrements de données affecté.

3. Appareil selon les revendications 1 ou 2, dans lequel les moyens sont en outre configurés pour effectuer ladite identification (223) en appliquant la demande obtenue aux données stockées, obtenant ainsi des données modifiées, et en identifiant à partir de celles-ci l'au moins une partition affectée.

4. Appareil selon l'une quelconque des revendications précédentes, dans lequel les moyens sont en outre configurés pour effectuer ladite agrégation (225) en récupérant les résultats de validation (24) pour les règles de validation respectives du sous-ensemble pour les partitions non affectées.

5. Appareil selon l'une quelconque des revendications précédentes, dans lequel les moyens sont en outre configurés pour effectuer le stockage (227) des données modifiées et des nouveaux résultats de validation (24') pour l'au moins une partition affectée.

6. Appareil selon l'une quelconque des revendications précédentes, dans lequel les partitions comprennent au moins un enregistrement de données distinct (101 ; 102).

7. Appareil selon l'une quelconque des revendications précédentes, dans lequel les moyens sont en outre configurés pour effectuer l'application (213) de l'ensemble prédéfini de règles de validation aux partitions respectives, obtenant ainsi des résultats de validation initiaux, et stockant (214) les résultats de validation initiaux.

8. Appareil selon l'une quelconque des revendications précédentes, dans lequel les données stockées comprennent des données de configuration pour un dispositif de réseau.

9. Appareil selon l'une quelconque des revendications précédentes, dans lequel l'appareil fait partie d'un système de gestion de base de données (204).

10. Appareil selon la revendication 9, dans lequel le système de gestion de base de données (204) est un système de gestion basé sur les requêtes.

11. Procédé (220) comprenant :
- l'obtention (221) d'une demande de modification d'enregistrements de données stockés dans une base de données ; les enregistrements de données étant divisés en partitions ;
- la sélection (222), dans un ensemble prédéfini de règles de validation, d'un sous-ensemble de règles de validation sur la base de la demande obtenue, le sous-ensemble de règles de validation comprenant une ou plusieurs règles de validation (22') ;
- l'identification (223) d'au moins une partition (121) affectée par la demande obtenue ;
- l'application (224) des une ou plusieurs règles de validation (22') du sous-ensemble à l'au moins une partition (121) affectée, obtenant ainsi des résultats de validation (24') pour une ou plusieurs règles de validation respectives pour l'au moins une partition (121) affectée ;
- l'agrégation (225) des résultats de validation (24') pour l'au moins une partition affectée avec des résultats de validation (24) pour les règles de validation respectives du sous-ensemble pour des partitions non affectées, obtenant ainsi des résultats agrégés (25) de validation pour les règles de validation respectives du sous-ensemble ; et
- la validation (226) des résultats agrégés (25) au moyen de conditions de validation (22") associées aux règles de validation respectives du sous-ensemble ;
et dans lequel le procédé comprend en outre la réalisation de ladite identification (223) en dérivant une expression de cartes d'index associée aux une ou plusieurs règles de validation du sous-ensemble et en créant les cartes d'index correspondantes à partir des enregistrements de données de l'au moins une partition affectée, obtenant ainsi des cartes d'index mappant les enregistrements de données de l'au moins une partition affectée à des index respectifs, et la réalisation de ladite application (224) en appliquant les une ou plusieurs règles de validation du sous-ensemble aux enregistrements de données respectifs au moyen des cartes d'index, obtenant ainsi des résultats de validation pour les règles de validation respectives par partition.

12. Produit de programme informatique comprenant des instructions exécutables par ordinateur pour amener un ordinateur à effecteur au moins ce qui suit :
- l'obtention (221) d'une demande de modification d'enregistrements de données stockés dans une base de données ; les enregistrements de données étant divisés en partitions ;
- la sélection (222), dans un ensemble prédéfini de règles de validation, d'un sous-ensemble de règles de validation sur la base de la demande obtenue, le sous-ensemble de règles de validation comprenant une ou plusieurs règles de validation (22') ;
- l'identification (223) d'au moins une partition (121) affectée par la demande obtenue ;
- l'application (224) des une ou plusieurs règles de validation (22') du sous-ensemble à l'au moins une partition (121) affectée, obtenant ainsi des résultats de validation (24') pour une ou plusieurs règles de validation respectives pour l'au moins une partition (121) affectée ;
- l'agrégation (225) des résultats de validation (24') pour l'au moins une partition affectée avec des résultats de validation (24) pour les règles de validation respectives du sous-ensemble pour des partitions non affectées, obtenant ainsi des résultats agrégés (25) de validation pour les règles de validation respectives du sous-ensemble ; et
- la validation (226) des résultats agrégés (25) au moyen de conditions de validation (22") associées aux règles de validation respectives du sous-ensemble ;
et dans lequel l'identification (223) comprend la dérivation d'une expression de cartes d'index associée aux une ou plusieurs règles de validation du sous-ensemble et la création des cartes d'index correspondantes à partir des enregistrements de données de l'au moins une partition affectée, obtenant ainsi des cartes d'index mappant les enregistrements de données de l'au moins une partition affectée à des index respectifs, et dans lequel l'application (224) comprend l'application des une ou plusieurs règles de validation du sous-ensemble aux enregistrements de données respectifs au moyen des cartes d'index, obtenant ainsi des résultats de validation pour les règles de validation respectives par partition.

13. Support de stockage lisible par ordinateur comprenant des instructions exécutables par ordinateur pour amener un ordinateur à effecteur au moins ce qui suit :
- l'obtention (221) d'une demande de modification d'enregistrements de données stockés dans une base de données, les enregistrements de données étant divisés en partitions ;
- la sélection (222), dans un ensemble prédéfini de règles de validation, d'un sous-ensemble de règles de validation sur la base de la demande obtenue, le sous-ensemble de règles de validation comprenant une ou plusieurs règles de validation (22') ;
- l'identification (223) d'au moins une partition (121) affectée par la demande obtenue ;
- l'application (224) des une ou plusieurs règles de validation (22') du sous-ensemble à l'au moins une partition (121) affectée, obtenant ainsi des résultats de validation (24') pour une ou plusieurs règles de validation respectives pour l'au moins une partition (121) affectée ;
- l'agrégation (225) des résultats de validation (24') pour l'au moins une partition affectée avec des résultats de validation (24) pour les règles de validation respectives du sous-ensemble pour des partitions non affectées, obtenant ainsi des résultats agrégés (25) de validation pour les règles de validation respectives du sous-ensemble ; et
- la validation (226) des résultats agrégés (25) au moyen de conditions de validation (22") associées aux règles de validation respectives du sous-ensemble ;
et dans lequel l'identification (223) comprend la dérivation d'une expression de cartes d'index associée aux une ou plusieurs règles de validation du sous-ensemble et la création des cartes d'index correspondantes à partir des enregistrements de données de l'au moins une partition affectée, obtenant ainsi des cartes d'index mappant les enregistrements de données de l'au moins une partition affectée à des index respectifs, et dans lequel l'application (224) comprend l'application des une ou plusieurs règles de validation du sous-ensemble aux enregistrements de données respectifs au moyen des cartes d'index, obtenant ainsi des résultats de validation pour les règles de validation respectives par partition.
